# EUROPEAN PATENT SPECIFICATION

(11) **EP 3 681 736 B1**
(45) Date of publication and mention of the grant of the patent: **21.01.2026**
(21) Application number: 18778559.7
(22) Date of filing: 29.08.2018
(51) Int. Cl.: B60C 11/03, B60C 11/04, B60C 11/13

(54) **TYRE FOR VEHICLE WHEELS**
FAHRZEUGREIFEN
PNEUMATIQUE POUR VÉHICULES

(30) Priority: 11.09.2017 IT 201700101409
(43) Date of publication of application: 22.07.2020
(73) Proprietor: Pirelli Tyre S.p.A., 20126 Milano (IT)
(72) Inventor: BELLO, Vito, 64747 Breuberg (DE); RAVIZZA, Carlo, 20126 Milano (IT); SPEZIARI, Diego, 20126 Milano (IT)
(74) Representative: Lasca, Sergio
(86) International application number: PCT/IB2018/056596
(87) International publication number: WO 2019/048991

(56) References cited:
- EP-A1- 2 913 203
- JP-A- H1 024 705
- US-A1- 2013 153 105

## Description

The present invention concerns a tyre for vehicle wheels, in particular, a tyre for high-performance cars.

A tyre generally comprises a carcass structure of a substantially toroidal shape around a rotational axis and includes at least one carcass ply provided with end flaps engaged with respective annular reinforcing structures, called beads.

In a position radially external to the carcass structure a belt structure is provided, comprising, in the case of car tyres, at least two radially overlapping strips of rubberised fabric provided with reinforcing cords, usually metallic, arranged in each strip parallel to each other but crossed respective to the cords of the adjacent strip, preferably symmetrically relative to the equatorial plan of the tyre.

Preferably, the belt structure further comprises, in a radially external position, at least on the ends of the underlying belt strips, a third layer of textile or metal cords, arranged circumferentially (at 0 degrees). A radially inner layer is further present in tubeless tyres, called a "liner", which has waterproof characteristics to ensure the air-tightness of the tyre itself.

In a position radially external to the belt structure a tread band is applied, made of elastomeric material, on which a tread surface, that is designed to make contact with the road surface, is defined.

In order to ensure adequate road grip even on a wet road surface, the tyres have a tread band provided with grooves and notches of various configuration and geometry which delimit portions of the tread bands, called blocks, intended to contact the ground.

The overall configuration of the tread band defined by the set of grooves, notches and blocks embodies the tread pattern.

The main function of grooves and notches is to allow for the evacuation of the water present between the surface of the tyre and the road surface at the moment of reciprocal contact, preventing the hydrostatic pressure resulting from the impact of the water against the advancing tyre from causing the partial lifting of the tyre from the road surface and the subsequent loss of control of the vehicle (a phenomenon known as "aquaplaning").

The grooves and the notches can also affect traction, directionality and driving stability characteristics of the tyre in relation to the tangential stresses, which are formed on the tread surface during the acceleration, braking and cornering of the vehicle.

The configuration of the tread pattern, as defined by the shape, orientation and number of grooves and notches, also contributes significantly to the determination of another important parameter of the tyre, its noise.

The noise created overall by the tyre rolling on the road surface results from a combination of noises generated by different sources, which may originate from different generating mechanisms.

In particular, the phenomena of noise generation can be of a mechanical nature, such as for example the vibrations of the tyre, or of an aerodynamic nature, such as for example the air vibrations present inside the cavities of the tyre.

One of these noise sources is related to resonance phenomena that occur within a groove when it, or a portion thereof, is in the footprint area, i.e. when it is in contact with the road surface.

In this situation, the groove, closed radially from the road surface, is similar to a tube, which can be opened at one or both ends.

The air present in the groove when in contact with the road surface therefore behaves like a column of air that can be made to vibrate.

From an acoustic point of view, the case in which this air column is vibrated at a frequency equal to the resonant frequency of the tube is of particular importance, since the sound generated by this vibration is amplified by the tube itself, which behaves like a resonator.

The resonance frequency of a tube, to which the groove can be assimilated when in the footprint area, depends substantially only on its geometry.

This implies that the frequency of the noise generated by the resonance phenomenon of the grooves depends largely on the size and shape of the groove and the footprint area of the tyre, while remaining independent of the rotational speed of the tyre.

The significance of this noise source is also aggravated by the fact that the resonance frequencies of the grooves with dimensions and configurations typically used in the manufacture of tyres are about 1KHz, a frequency range to which the human ear is very sensitive.

Several solutions have been proposed to try to limit the noise impact generated by the resonance of the grooves in the footprint area.

In a first solution, resonance chambers have been created on the tread band, which are suitably connected to the grooves, thus attenuating the intensity of the noise produced. An example of of this type is described in EP 989000.

In a second solution grooves have been created with a continuously variable section, for example grooves with a corrugated section. An example of a solution of this type is described in CN 106183644.

In a third solution, flexible fins are inserted in the grooves in a manner that substantially obstructs the section of the groove and, if necessary, bends under the pressure of the water to allow it to flow along the groove. An example of a solution of this type is described in US 2013/0014872.

In a fourth solution, elements are inserted into the grooves, which partially obstruct the section of the groove, rising from the bottom of the groove to a lesser extent with respect to the level of the tread surface. An example of a solution of this type is described in EP 2406088.

EP 2913203 describes a plurality of protuberances arranged in at least one circumferential groove. A plurality of sipes are arranged in a land portion adjacent to the groove wall surface of the circumferential groove to which the protuberances extend, the sipes being open to the circumferential groove in areas where the respective protuberances are arranged.

US 2013/153105 describes a tread of a heavy vehicle tyre comprising a plurality of circumferential grooves, each circumferential groove comprising a plurality of protuberances formed as protrusions on at least a lateral wall delimiting this groove. Half-close notches face respective protuberances.

The term "groove" means a recess provided in a portion of the tread band, having a width greater than or equal to 1.5 mm, preferably greater than or equal to 3 mm, and preferably a depth greater than 3 mm.

The term "notch" means a recess provided in a portion of the tread band, having a width less than 1.5 mm, preferably less than or equal to 1 mm.

The width of said notches and grooves is measured at a depth greater than or equal to 1 mm, preferably greater than or equal to 1.5 mm.

The "longitudinal direction" of a groove means the prevailing development direction of the same on the tread band.

"Circumferential" direction means a direction generally oriented according to the rotational direction of the tyre, or, at most, slightly slanted (at most by about 5°) relative to the rotational direction of the tyre.

A groove is called "circumferential" when it extends along a circumferential line or, at most, is inclined at an angle of less than 5° respective to the circumferential direction.

A groove is called "transverse" when it extends along an incline respective to the circumferential direction of an acute angle greater than at least 10°.

The inclination of a direction with respect to a circumferential direction identified on the tread band is defined by the acute angle formed by the said direction with the circumferential direction. As a special case, a direction extending parallel to the axis of the tyre will have an inclination of 90° with respect to the circumferential direction.

"Tread surface" means the radially external surface portion of the tread band designed to come into contact with the road surface when the tyre is rolling.

By "tread pattern" we mean the overall configuration of the tread band as defined by the set of grooves and notches.

It should be noted that the set of grooves and notches represents the portion of the tread band which does not come into contact with the road surface when the tyre is rolling.

The complementary band portion, formed by the tread band, which comes into contact with the road surface when the tyre rolls, may comprise "blocks", intended as portions of the tread band delimited by grooves or notches or by the lateral edges of the tread band.

A particular case of a block is the "rib", a portion of the tread band annularly extended along the entire circumferential extent of the tread band.

A "module" of the tread pattern is defined by the minimum tread band portion whose configuration is repeated successively along the circumferential extension of the tread band to form said tread pattern, or a circumferential portion thereof.

A module is generally extended between the axial ends of the tread band. However, in some special cases, for example for high-performance tyres, different modules can be provided on the tread band for different circumferential portions. For example, a tyre can provide a first module on the outer region of the tread band and a second module in the inner region of the tread band.

Moreover, while maintaining a substantially identical basic configuration, the modules can have a slightly different circumferential dimension (called "pitch"), for example on a tread band different modules having two, three or four different pitches can be used, combined in various combinations with one other. If the difference in pitch between different modules is significant, it is possible that an additional element (for example a transverse groove) may be provided in the module with a longer pitch than in the shorter pitch module. This also applies in the case in which different modules are provided for different circumferential portions. A module can be formed from two or more "sub-modules", where each sub-module is a portion of the module extending between the axial ends of the tread band or of a circumferential portion thereof. Each sub-module may be delimited at the circumferential ends by corresponding transverse grooves and may be formed by whole blocks and/or rib portions, which, overall, give rise to an individually identifiable configuration. Moreover, similar to the modules, each sub-module can have a slightly different circumferential dimension.

A "restricting element" of a groove is an element located in the groove cavity capable of obstructing at least 20% of the groove section.

A restricting element of a groove, or one of its portions, is defined as "flexible" (or, respectively, "rigid"), if it deforms (or, respectively, if it does not deform) appreciably when subjected to the normal forces exerted on the groove by the water in driving conditions on a wet road surface. In other words, the fraction of the section obstructed by a rigid restricting element does not change when water flows along the groove, while it varies if the restricting element, or a portion thereof, is flexible.

Two restricting elements are considered to be "aligned" along a predefined direction when the projection of at least one of said restricting elements along said predetermined direction overlaps at least 50% of the area of the other of such restricting elements.

One side is "substantially parallel" to a direction when it is inclined with respect to that direction by an angle of less than 5°.

A side can be rectilinear or curvilinear. In particular, a side can be formed by an arc of circumference. Preferably the radius of curvature of this arc of circumference is greater than the extension of the side, more preferably it is at least 5 times greater than the extension of the side and even more preferably it is at least 10 times greater than the extension of the side.

Two curvilinear sides formed by an arc of circumference are considered to be aligned with one other when they lie substantially on the same circumference.

The direction of extension of a side is defined as the direction defined by the straight line passing through the ends of the side.

A "quadrilateral" figure is a flat figure bordered on four sides.

The Applicant has preliminarily verified that the phenomenon of noise generation by groove resonance has a non-neglible impact on the formation of total noise caused by the rolling of the tyre on the road surface.

Moreover, the Applicant has observed that the noise caused by the rolling of the tyre on the road surface is particularly significant in the case of vehicles with very quiet engines, such as electric vehicles.

The Applicant therefore has felt the need to reduce the noise generated by the rolling of the tyre caused by the groove resonance.

To this end, the Applicant has observed that the phenomenon of groove resonance is particularly significant in the grooves that have greater width and depth which, containing a greater quantity of air which can vibrate, give rise to the generation of sounds with greater intensity.

However, the Applicant has observed that the circumferential grooves are the ones most responsible for the rapid evacuation of the water when traveling on wet roads, so an occlusion of their section may affect the ability to prevent aquaplaning, which ability, naturally, must be properly ensured.

The Applicant has further observed that the obstruction of the grooves by providing flexible fins may complicate the manufacturing steps for the tyre and may not be sufficiently effective over time, due, for example, to the possible breakage of the fins.

The Applicant has also observed that the insertion into the groove of elements that partially obstruct the section, while being effective in limiting the generation of the resonance phenomenon, can in turn become a further source of noise when they too are in contact with the road surface, in particular if their height is similar to that of the groove in which they are inserted.

Moreover, the Applicant has also observed that this disadvantage may also arise in tyres wherein the aforesaid elements are initially arranged in the groove at a lower level with respect to the tread surface, since the latter is subject to wear and tear and therefore to deterioration during the lifetime of the tyre.

The Applicant therefore perceived that the provision of elements in the groove that partially obstruct the section of the groove must take into due account any noise caused by the impact of these elements on the road surface, both whether this impact is already foreseen in the new tyre or whether this impact occurs at a later time.

The Applicant has finally found that the noise reduction generated by groove resonance can be achieved without contributing to the generation of a greater source of noise and without compromising the ability to prevent aquaplaning, by inserting restricting elements into the grooves whose shape and/or position is suitably optimized.

According to the invention, a tyre is provided as defined in claim 1.

The restricting elements, if they come into contact with the road surface, impact it gradually, substantially limiting the intensity of the noise generated, if any. Preferably, said first direction is inclined with respect to said longitudinal direction of said first groove by an angle of between 40° and 70°.

In a first embodiment, said first direction is inclined with respect to said longitudinal direction of said first groove by an angle of between 40° and 50°, preferably about 45°.

In a second embodiment, said first direction is inclined with respect to said longitudinal direction of said first groove by an angle of between 60° and 70°, preferably about 65°.

Preferably, said opposite sides of said first pair are arcs of a circumference. Preferably, said opposite sides of said first pair have a radius of curvature greater than 10 times their extension.

In this way the sides of the first pair are slightly curvilinear. This allows for a greater degree of flexibility in defining their correct entry into the footprint area. Preferably, said restricting element has a shape, in plan view, in which a second pair of opposite sides extending along a second direction is identified.

In this way the shape in plan view of the restricting element is substantially that of a parallelogram.

Preferably, said second direction is substantially parallel to said longitudinal direction of said first groove.

Preferably, said opposite sides of said second pair are substantially rectilinear. Preferably, said opposite sides of said second pair have a measurement of between 10 and 20 mm.

Preferably, said first groove is a circumferential groove of said tread band. Preferably, said first groove has a depth of at least 5 mm.

Preferably, said first groove has a width of at least 10 mm.

In this manner, the restricting elements are provided in the grooves that contribute more to the creation of noise generated by the phenomenon of groove resonance. Each of said restricting elements comprises a first surface extending from a top of said restricting element towards a bottom of said first groove.

Said first surface is inclined with respect to a tread surface that is defined in a radial external position on said tread band.

Preferably, said first surface is flat.

In this manner, the surface of the restricting element possibly in contact with the road surface is substantially proportional to the degree of wear of the tread band. In particular, the surface of the restricting element in contact with the road surface, a potential source of noise, becomes gradually greater as the depth of the groove decreases and, therefore, as the noise generating capacity of the groove decreases. Furthermore, the provision of an inclined surface that reflects light differently from the rest of the groove highlights the presence of restricting elements, making them visually identifiable and easily recognizable.

Preferably, said first surface is inclined with respect to said tread surface by an angle of between 15° and 50°.

More preferably, said first surface is inclined with respect to said tread surface by an angle of between 20° and 45°.

Preferably, said first surface is parallel to said longitudinal direction of said first groove.

Preferably, said first surface extends from said top up to a lateral wall of said restricting element extending from a bottom of said first groove.

Preferably, the distance from said top to the bottom of said first groove is more than 50% of the depth of said first groove.

Preferably, said first surface and said lateral wall of said restricting element are joined to one another at a depth with respect to said tread surface of between 2 and 4 mm.

Preferably, said restricting element extends from a first lateral wall of said first groove towards a second lateral wall of said first groove, opposing said first lateral wall.

In a preferred embodiment, all of the restricting elements extend from said first lateral wall of said first groove.

In an alternative embodiment, said restricting elements alternately extend from said first lateral wall and from said second lateral wall of said first groove. Preferably, in said second lateral wall a plurality of recesses is provided in alternating positions with said restricting elements.

Preferably, said recesses are provided at the edge between said second lateral wall and said tread surface.

Preferably, said restricting element extends from said first lateral wall up to a fraction of between 30% and 80%, more preferably between 40% and 60% of the width of said first groove even more preferably about 50%.

The extension of the restricting element with respect to the width of the first groove is measured at the point of maximum distance of the restricting element from the first lateral wall.

In this manner, the restricting element obstructs an adequate fraction of the groove section to reduce the resonance phenomenon, leaving enough space for the water to flow out in wet conditions.

In an alternative embodiment, said restricting element extends between said first lateral wall and said second lateral wall covering the entire width of said first groove.

In this case, the top of said restricting element is conveniently lowered with respect to the tread surface so as not to excessively obstruct the groove section.

In one embodiment, said restricting element is at least partly separated from the said first lateral wall by a notch.

In this manner, the restricting element is less subject to vibrations coming from the tread band in contact with the road surface.

In a further embodiment, said restricting element is completely separated from the lateral walls of said first groove.

In this manner, the restricting element is completely isolated within the groove.

In one embodiment, said first surface joins said lateral wall of said restricting element to said first lateral wall of said first groove.

Preferably, said first surface and said first lateral wall of said first groove are joined to one another at a depth of between 1 and 2 mm with respect to said tread surface.

In this manner, the restricting element comes in contact with the road surface only after a certain degree of wear on the tyre.

In a different embodiment, said first surface joins said lateral wall of said restricting element to said tread surface, such that said top of said restricting element is formed by a corner between said tread surface and said first surface.

In this manner, the restricting element allows for obstruction of the fraction of the section of the desired groove taking full advantage of the groove height, without leading to an increase in the area that impacts the road surface.

Preferably, said corner is aligned continuously with an edge formed by said first lateral wall of said first groove with said tread surface.

Preferably, said restricting element obstructs between 30% and 60% of the cross section of said first groove, more preferably between 35% and 50%.

In this manner, the disruptive action of the resonance formation and the capacity of water flow along the groove is optimized.

Preferably, said restricting elements are spaced apart from one another in such a way that in the footprint area, said first groove has a number of restricting elements between 1 and 3.

Preferably, the restricting elements are rigid and are not appreciably deformed by the outflow of water along the first groove.

Preferably, the restricting elements are made from the same elastomeric material that the tread band is made of.

In a further embodiment, said restricting element comprises at least one flexible fin extending from a rigid main body having said flat quadrilateral shape.

In this case, the flexible fin is designed such that, when driving on wet roads, it bends when subjected to the flow of water that flows along the first groove, so as to not prevent the outflow.

The provision of this flexible fin increases the obstructed groove section, further limiting the formation of resonance phenomena in the groove.

The number and shape of the flexible fins extending from the main body may vary accordingly.

On said tread band a tread pattern defined by the overall configuration of grooves and notches provided on said tread band is identified.

In one embodiment, a module of said tread pattern is identified on said tread band. In such embodiment, said restricting elements are positioned such that one restricting element is provided for every two or three successive modules.

In this way it is achieved that the number of restricting elements on the first groove in the footprint area is always adequate, in particular a number between 1 and 3.

In a further embodiment, said module is formed by a first sub-module and a second sub-module with a different configuration.

In such embodiment, each of said restricting elements is positioned in one of said first sub-modules.

Thanks to these embodiments, the tyre in the invention has an adequate number of restricting elements in the footprint area to maintain adequate water outflow capacity when traveling on wet roads and allows for low noise levels even in the case wherein the restricting elements, by their own conformation or due to tyre wear, come into contact with the road surface.

In this case, in fact, the restricting elements generate a noise distributed over a relatively wide frequency spectrum, as a consequence of the fact that they are positioned inside modules or sub-modules with appropriately differentiated and optimized pitch lengths precisely to minimize the noise produced by the impact of the blocks with the road surface.

Preferably, each first sub-module comprises one of said restricting elements.

In this manner, the restricting elements are arranged with suitable space between one another, so that in the footprint area the first groove always has a number of restricting elements between 1 and 3.

Preferably, said restricting elements are arranged in the same predefined position within the said first sub-module.

In this manner, the restricting elements are distributed along the circumferential extent consistent with the distribution of module pitches, such that their possible impact with the road surface generates a noise distributed over a very wide frequency spectrum, exploiting the optimization of the pitches of the modules used to reduce the noise generated by the impact of the blocks with the road surface. Preferably, on said tread band a second groove is provided in which a second plurality of restricting elements is arranged.

Preferably, a restricting element of said first plurality corresponds to each restricting element of said second plurality.

Preferably, said restricting element of said first plurality and said corresponding restricting element of said second plurality are substantially aligned in said first direction.

In this manner, given that the first direction is inclined with respect to said axial direction of the tread band, the restricting elements of the first and second groove enter the footprint area in subsequent times, further limiting any noise generated by their impact with the road surface.

Furthermore, this alignment of restricting elements allows for preparation of a tread pattern with an ordered texture, which increases its recognition and appreciation. Preferably, said restricting elements of said second plurality are analogous to said restricting elements of said first plurality. Preferably, said second groove is parallel to said first groove.

Preferably, for each restricting element of said first plurality, said first direction is inclined with respect to said longitudinal direction of said first groove by an angle of between 40° and 50°.

Preferably, for each restricting element of said second plurality, said first direction is inclined with respect to said longitudinal direction of said second groove by an angle of between 60° and 70°.

Preferably, said first and said second groove are adjacent.

Preferably, said restricting elements of said first plurality and of said second plurality are extended from the lateral walls of said first groove and of said second groove respectively, which delimit the same block.

In the preferred case wherein the first and second groove are circumferential grooves, the block that they delimit is a circumferential rib.

Preferably, all said restricting elements of said second plurality are positioned in said second sub-module.

The characteristics and advantages of the invention will become clearer from the detailed description of a preferred embodiment thereof, illustrated using a nonlimiting example with reference to the accompanying drawings, wherein:
- figure 1 is a front view of a tyre for vehicle wheels made according to the present invention;
- figure 2 is a schematic view in enlarged scale of a significant portion of the tread band of the tyre in figure 1,
- figure 3 is a schematic view in enlarged scale of a section along the III-III line of the tyre in figure 1,
- figure 4 is a schematic view in enlarged scale of a section along the IV-IV line of the tyre in figure 1,
- figure 5 is a schematic view in a section analogous to figure 3 of a variant embodiment of the tyre in the invention.

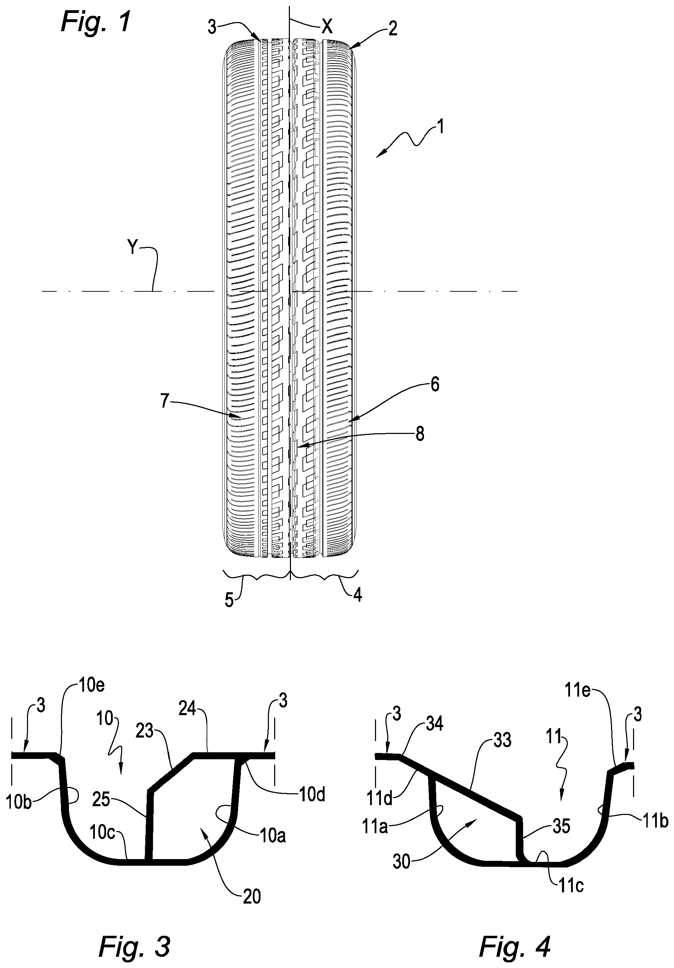

With initial reference to figures 1 to 4, 1 indicates generally a tyre for vehicle wheels in accordance with the present invention.

Tyre 1 comprises a conventional tyre structure, not shown in the attached figures, as well as a tread band 2 on which a tread surface 3 is defined, arranged radially externally to the tread band 2 and intended for contact with a road surface.

Tyre 1 has a conventional generically toroidal shape around a rotational axis, defining on the tread surface 3, an axial direction Y parallel to it, and crossed by an equatorial plane X, perpendicular to the axis of rotation and defining on the tread surface 3 a circumferential direction parallel to it.

Tyre 1 is preferably arranged to be mounted on a vehicle equipped with an elliptical engine and with a nominal section width of about 195 mm.

Tyre 1 is an asymmetrical tyre such that the equatorial plane X divides the tread band 2 into an inner region 4 of the tread band, intended to be facing towards the inside of the vehicle when the tyre is mounted on the vehicle, and into an external region 5 of the tread band, axially opposed to the inner region 4.

On the tread band 2 an inner shoulder region 6, an outer shoulder region 7, axially opposed to the inner shoulder region 6, and a central region 8 extended between the shoulder regions 6 and 7, are also defined.

In the central region 8 a plurality of circumferential grooves is provided, in each of which the respective longitudinal direction coincides substantially with the circumferential direction defined on the tread band 2.

In particular, in the portion of inner region 4 of the tread band belonging to the central region 8 a first groove 10 is provided, extending into the inner region 4 starting from the equatorial plane X, and a second groove 11 that separates the central region 8 from the inner shoulder region 6. The first and second grooves 10 and 11 delimit a first circumferential rib 12.

Similarly, a third groove 13 and a fourth groove 14, which separates the central region 8 from the outer shoulder region 7, are provided in the portion of the outer portion 5 of the tread band belonging to the central region 8. The third and fourth grooves 13 and 14 delimit a second circumferential rib 15, while a third circumferential rib 16 is defined between the first and third grooves 10 and 13. The first and second grooves 10 and 11 both have a width of about 11 mm and a depth of about 6.5 mm, the third groove 13 has a width of about 7 mm and a depth of about 6.5 mm, while the fourth groove 14 has a width of about 3 mm and a depth of about 2 mm.

In the inner shoulder region 6 and in the outer shoulder region 7 respective pluralities of transverse grooves 17 and 18 are provided, extending along an inclined direction of about 10°-15° with respect to the circumferential direction. The transverse grooves 17, 18 are not open on circumferential grooves.

Inside the first groove 10 there is provided a first plurality of restricting elements 20 arranged to restrict, in predefined positions, the section of the first groove 10. The restricting elements 20 are rigid and are made of the same elastomeric material with which the tread band 2 is made.

Each restricting element 20 has a substantially flat quadrilateral and parallelogram shape, wherein a first pair of opposite and parallel sides 21 and a second pair of opposite and parallel sides 22 are identified.

The sides 21 are slightly curvilinear and are formed by respective circumferential arcs with a curvature radius of about 120 mm. The sides 21 extend along a first direction A inclined relative to the circumferential direction of about 45° for a measurement of about 7-8 mm.

The sides 22 are rectilinear and extend in the circumferential direction for a measurement of about 17 mm.

Each restricting element 20 is extended from a first lateral wall 10a of the first groove 10 towards a second lateral wall 10b of the first groove 10, up to about half the width of the first groove 10.

Each restricting element 20 comprises moreover a first surface 23, extending from a top 24 of the restricting element 20 towards a bottom 10c of the first groove 10. The first surface 23 is a flat surface, inclined at about 40° relative to the tread surface 3 and oriented parallel to the circumferential direction.

In the preferred embodiment described here, the first surface 23 connects a lateral wall 25 of the restricting element 20, erected from the bottom 10c of the first groove 10, with the tread surface 3.

The top 24 of the restricting element 20 is therefore formed by a corner between the tread surface 3 and the first surface 23, slightly protruding into the first groove 10 by about 2 mm.

Said corner is also extended from one side of the restricting element 20 by a measurement of about 10 mm, so that the width of the first groove 10 is also slightly reduced in this section.

The corner between the tread surface 3 and the first surface 23 forms a side 22 from the flat shape of the restricting element 20, while the other side 22 is formed from the corner between the first surface 23 and the lateral wall 25 of the restricting element 20.

The corner between the first surface 23 and the lateral wall 25 of the restricting element 20 is lowered by about 2-3 mm with respect to the portion of the tread surface 3.

Each restricting element 20 obstructs about 45% of the transverse section of the first groove 10.

The first and the second lateral walls 10a and 10b of the first groove 10 are connected to the tread surface 3 by the respective chamfers 10d and 10e.

In the second lateral wall 10b of the first groove 10 moreover there is provided a plurality of recesses 26 arranged in an alternating manner with the restricting elements 20 extending from the first lateral wall 10a.

The recesses 26 are provided near the corner between the second lateral wall 10b and the tread band 3 and have a depth of about 3 mm, an axial extension of about 2 mm and a circumferential extension of about 16-17 mm.

Inside the second groove 11 a second plurality of restricting elements 30 is provided and arranged to restrict, in predefined positions, the section of the second groove 11.

The restricting elements 30 are substantially analogous to the restricting elements 20.

They also have a substantially flat quadrilateral, parallelogram shape, wherein, a first pair of opposite and parallel sides 31 and a second pair of opposite and parallel sides 32 are identified.

The sides 31 are slightly curvilinear and are formed by respective arcs of circumference with a curvature radius of 120 mm and extend in a first direction B inclined relative to the circumferential direction of about 65° for a measurement of about 7-8 mm.

The sides 32 are rectilinear and extend in the circumferential direction for a measurement of about 15 mm.

Each restricting element 30 extends from a first lateral wall 11a of the second groove 11 towards a second lateral wall 11b of the second groove 11, up to about half the width of the second groove 11.

Each restricting element 30 moreover comprises a first surface 33, extending from a top 34 from the restricting element 30 towards a bottom 11c of the second groove 11.

The first surface 33 is a flat surface, inclined by about 25° relative to the tread surface 3 and oriented parallel to the circumferential direction.

The first surface 33 joins a lateral wall 35 of the restricting element 30, erected from the bottom 11c of the second groove 11 with the first lateral wall 11a of the second groove 11 connecting with the tread surface 3.

In this manner, the top 34 of the restricting element 30 is formed by a corner between the tread surface 3 and the first surface 33, which results in substantial alignment with the corner formed by the first lateral wall 11a of the second groove 11 with the tread surface 3.

The corner between the tread surface 3 and the first surface 33 form a side 32 in a flat shape of the restricting element 30, while the other side 32 is formed from the corner between the first surface 33 and the lateral wall 35 of the restricting element 30.

The corner between the first surface 33 and the lateral wall 35 of the restricting element 30 is lowered by about 3-4 mm relative to the portion of the tread surface 3.

Each restricting element 30 obstructs about 30%-35% of the cross section of the second groove 11.

Each restricting element 20 provided in the first groove 10 is substantially aligned in the first direction A with a corresponding restricting element 30 provided in the second groove 11.

In particular, each side 21 of a restricting element 20 lies substantially on the same circumference on which lies a side 31 of a corresponding restricting element 30.

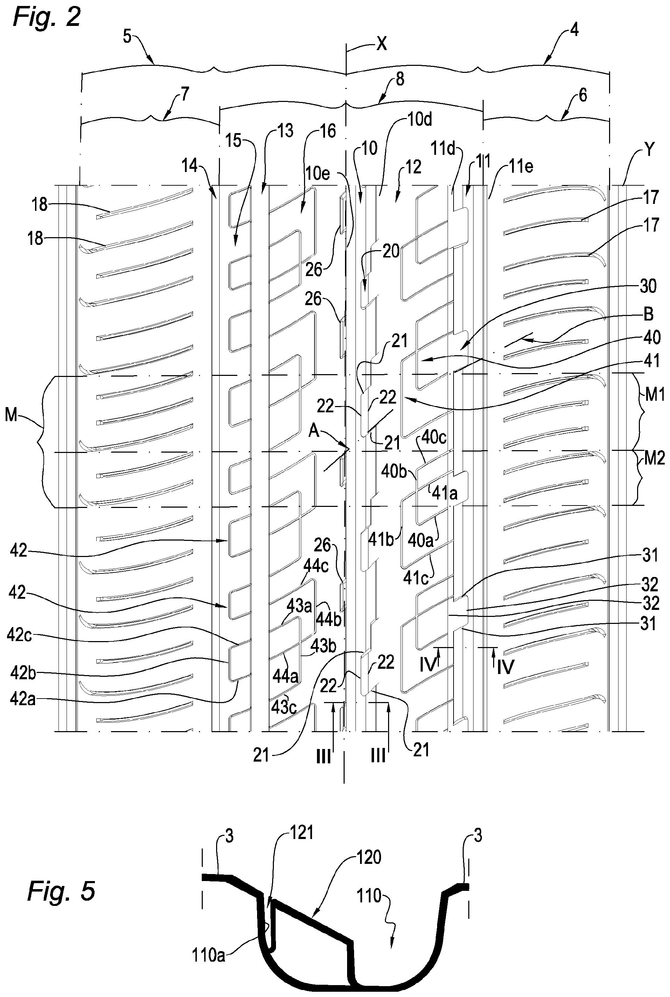

As an alternative to the method described above, the restricting elements 20 and/or 30 can be created as illustrated schematically in figure 5.

In this embodiment variant, it is envisaged that the restricting element, here indicated generically with 120, is partly separated from the first lateral wall (indicated by 110a) of the circumferential groove (indicated by 110) by means of a notch 121.

Returning to the preferred embodiment illustrated in figures 1 to 4, the first circumferential rib 12 is delimited on the opposing sides respectively by the first lateral wall 10a of the first groove 10 and the first lateral wall 11a of the second groove 11, such that the restricting elements 20 and the restricting elements 30 extend from the opposing sides of the first circumferential rib 12.

The first and the second lateral wall 11a and 11b of the second groove 11 are joined to the tread surface 3 by respective chamfers 11d and 11e.

On the first circumferential rib 12 there is provided a plurality of first notches 40, shaped like a "C", having a depth of about 5 mm and a width of about 0.6 mm.

Each first notch 40 comprises a first branch 40a, extending from the first lateral wall 11a of the second groove 11 towards the inside of the first circumferential rib 12, a second branch 40b, extending from the first branch 40a in the circumferential direction, as well as a third branch 40c, substantially parallel to the first branch 40a which again opens onto the first lateral wall 11a of the second groove 11.

The first branch 40a is continuously aligned with a side 31 of a restricting element 30, inclined at about 60° with respect to the circumferential direction, and extends up to a little less than half the width of the first circumferential rib 12. The second branch 40b extends parallel and in a manner consistent with the lateral wall 35 of the restricting element 30, but for an extension equal to about twice the circumferential extension of the lateral wall 35.

On the first circumferential rib 12 a plurality of second notches 41 are also provided, similar to the first notches 40.

Each second notch 41 is therefore shaped like a "C", with a depth of about 5 mm and a width of about 0.6 mm and comprises a first branch 41a, extending from the first lateral wall 11a of the second groove 11 towards the inside of the first circumferential rib 12, a second branch 41b, extending from the first branch 41a in the circumferential direction, as well as a third branch 41c, substantially parallel to the first branch 41a, which again opens onto the first lateral wall 11a of the second groove 11.

The first branch 41a is aligned continuously from a side 31 from a restricting element 30, inclined at about 60° with respect to the circumferential direction, and extending up to just over half the width of the first circumferential rib 12.

In particular, the two sides 31 of a restricting element 30 are continuously aligned, respectively, from the first branch 40a of the first notch 40 and of the first branch 41a of the second notch 41.

The second branch 41b of the second notch 41 extends in a parallel and concordant manner with the lateral wall 35 from the restricting element 30, for an extension equal to about twice the circumferential extension of the lateral wall 35.

The first notches 40 and the second notches 41 intersect at the first branch 41a and the second branch 40b.

On the second circumferential rib 15 there is provided a plurality of third notches 42, shaped like a "C", having a depth of about 5 mm and a width of about 0.6 mm. Each third notch 42 comprises a first branch 42a, extending from the third groove 13 towards the inside of the second circumferential rib 15, a second branch 42b, extending from the first branch 42a in the circumferential direction, as well as a third branch 42c, substantially parallel to the first branch 42a which again opens onto the third groove 13.

The first and third branches 42a and 42c extend in an inclined direction of about 70° with respect to the circumferential direction and are extended by a measurement of about 8 mm, while the second branch 42b extends in the circumferential direction for a measurement of approx. 14-15 mm.

On the third circumferential rib 16 a plurality of fourth notches 43 and a plurality of fifth notches 44 formed substantially similarly to the first and second notches 40 and 41 provided on the first circumferential rib 12 are also provided.

In particular, each fourth notch 43 comprises a first branch 43a, extending from the third groove 13 towards the inside of the third circumferential rib 16, a second branch 43b, extending from the first branch 43a in the circumferential direction, as well as a third branch 43c, substantially parallel to the first branch 43a, which again opens onto the third groove 13.

The first branch 43a is aligned continuously with the third branch 42c of a corresponding third notch 42, with an inclination of about 60° respective to the circumferential direction, and extends up to a little less than half the width of the third circumferential rib 16. The second branch 43b extends parallel to and in a concordant manner with the second branch 42b of the corresponding third notch 42, but for an approximately double extension.

Moreover, the third branch 43c is continuously aligned with the third branch 42c of a third notch 42 preceding the third corresponding notch 42.

Each fifth notch 44 comprises a first branch 44a, extending from the third groove 13 towards the inside of the third circumferential rib 16, a second branch 44b, extending from the first branch 44a in the circumferential direction, as well as a third branch 44c, substantially parallel to the first branch 44a, which again opens onto the third groove 13.

The first branch 44a is aligned continuously with the third branch 42a of a corresponding third notch 42, with an inclination of about 60° respective to the circumferential direction, and extends up to a little less than half the width of the third circumferential rib 16. The second branch 44b extends parallel to and in a concordant manner with the second branch 42b of the corresponding third notch 42, but for an approximately double extension.

Moreover, the third branch 44c is continuously aligned with the third branch 42c of a third notch 42 successive to the corresponding third notch 42.

The fourth notches 43 and the fifth notches 44 intersect at the first branch 44a and the second branch 43b.

The overall configuration of the grooves and notches described above defines the tread pattern of the tyre 1, in which a module M is repeatedly identified in succession along the circumferential extent of the tread band 2.

The module M is formed by a first sub-module M1 and a second sub-module M2 with a different configuration, shown in figure 2 with a dashed line.

Each first and second sub-module M1 and M2 can have three different circumferential dimensions, a short pitch, a medium pitch and a long pitch, and the M module can be formed by combining each of the first three sub-modules 1 with each of the three second sub-modules M2.

The M modules created by the combination are arranged in succession on the tread band 2.

In each first sub-module M1 there is a restricting element 20 arranged in the first groove 10, while in each second sub-module M2 there is a restricting element 30 arranged in the second groove 11.

Moreover, each restricting element 20 is arranged inside the first sub-module M1 always in the same relative position, and, likewise, also each restricting element 30 is arranged inside the second sub-module M2 always in the same relative position. When tyre 1 rolls on the road surface, the first groove 10 is interrupted, in the footprint area, by two or three restricting elements 20, while the second groove 11 is interrupted, in the footprint area, by two or three restricting elements 30.

Tyre 1, thanks to the embodiments described above, has extremely low noise levels both when the tyre is new and after a certain degree of wear and tear.

Moreover, the capacity for water evacuation, especially in preventing aquaplaning phenomena, remains largely adequate.

Naturally, a person skilled in the art can create further modifications and variations in order to satisfy specific and contingent application requirements that however fall within the scope of protection of the abovementioned invention as defined by the following claims.

## Claims

1. Tyre (1) for vehicle wheels comprising a tread band (2) on which there are provided:
- at least a first groove (10; 11) extending in a longitudinal direction; and
- a first plurality of restricting elements (20; 30) provided inside said first groove for restricting the cross section of said first groove,
wherein each of said restricting elements has, in plan view, a substantially quadrilateral shape in which there is identified a first pair of opposite sides (21; 31) which extend in a first direction (A; B) that is inclined respective to said longitudinal direction by an angle of between 30° and 80°,
wherein each of said restricting elements (20; 30) comprises a first surface (23; 33), which is inclined with respect to a tread surface that is defined radially externally on said tread band, said first surface (23; 33) extending from the top (24; 34) of said restricting element towards a bottom (10c; 11c) of said first groove (10; 11),
wherein:
- a tread pattern defined by the overall arrangement of grooves and notches made in said tread band, and
- a module (M) of said tread pattern, defined by the minimum tread band portion whose configuration is repeated successively along the circumferential extension of the tread band to form said tread pattern, or a circumferential portion thereof,
are identified on said tread band, **characterized in that**
said restricting elements are positioned such that one restricting element is provided for every two or three successive modules,
or
wherein said module is formed by a first sub-module (M1) and by a second sub-module (M2) having different arrangements, and each of said restricting elements (20) is positioned in one of said first sub-modules (M1).

2. Tyre according to claim 1, wherein said opposite sides (21; 31) of said first pair are arcs of a circumference.

3. Tyre according to claim 1 or 2, wherein said first groove (10; 11) is a circumferential groove of said tread band.

4. Tyre according to any one of the preceding claims, wherein said first surface (23; 33) is inclined with respect to said tread surface (3) by an angle of between 15° and 50°.

5. Tyre according to any one of the preceding claims, wherein said first surface (23; 33) is parallel to said longitudinal direction of said first groove.

6. Tyre according to any one of the preceding claims, wherein said first surface (23; 33) extends from said top (24; 34) up to a lateral wall (25; 35) of said restricting element that extends from said bottom (10c; 11c) of said first groove, wherein said first surface (23; 33) and said lateral wall (25; 35) of said restricting element are connected together at a depth with respect to said tread surface of between 2 and 4 mm.

7. Tyre according to any one of the preceding claims, wherein said restricting element (20; 30) extends from a first lateral wall (10a; 11a) of said first groove (10) towards a second lateral wall (10b; 11b) of said first groove that is opposite said first lateral wall, over between 30% and 80% of the width of said first groove.

8. Tyre according to claim 7, wherein at least part of said restricting element (120) is separated from said first lateral wall (110a) by a notch (121).

9. Tyre according to any one of claims 7 or 8, wherein said first surface (23; 33) and said first lateral wall (10a; 11a) of said first groove are connected to one another at a depth of between 1 and 2 mm with respect to said tread surface (3).

10. Tyre according to any one of claims 7 or 8, wherein said first surface (23; 33) connects a lateral wall of said restricting element (20; 30) to said tread surface (3), such that said top (24; 34) of said restricting element is formed by a corner between said tread surface and said first surface.

11. Tyre according to any one of the preceding claims, wherein said restricting element (20; 30) obstructs between 30% and 60% of the cross section of said first groove.

12. Tyre according to any one of the preceding claims, wherein said restricting elements (20; 30) are spaced apart in said longitudinal direction such that, in footprint area, said first groove (10) comprises between 1 and 3 restricting elements.

13. Tyre according to any one of the preceding claims, wherein a second groove (11) is provided in said tread band, in which a second plurality of restricting elements (30) is provided, and wherein a restricting element (30) of said second plurality, which is preferably aligned in said first direction (A), corresponds to each restricting element (20) of said first plurality.

14. Tyre according to claim 13, wherein, for each restricting element (20) of said first plurality, said first direction (A) is inclined with respect to said longitudinal direction of said first groove (10) by an angle of between 40° and 50°, and for each restricting element (30) of said second plurality, said first direction (B) is inclined with respect to said longitudinal direction of said second groove (11) by an angle of between 60° and 70°.

15. Tyre according to claim 13 or **14,** wherein said first and second grooves (10, 11) are adjacent to one another and said restricting elements of said first plurality and of said second plurality extend from lateral walls of said first groove and said second groove, respectively, which delimit the same block (12).

## Patentansprüche

1. Reifen (1) für Fahrzeugräder, umfassend ein Laufflächenband (2), auf dem Folgendes bereitgestellt ist:
- mindestens eine erste Nut (10; 11), die sich in einer Längsrichtung erstreckt; und
- eine erste Vielzahl von Begrenzungselementen (20; 30), die innerhalb der ersten Nut zum Begrenzen des Querschnitts der ersten Nut bereitgestellt sind,
wobei jedes der Begrenzungselemente in der Draufsicht eine im Wesentlichen viereckige Form aufweist, in der ein erstes Paar gegenüberliegender Seiten (21; 31) gekennzeichnet ist, die sich in einer ersten Richtung (A; B) erstrecken, die in Bezug auf die Längsrichtung um einen Winkel zwischen 30° und 80° geneigt ist,
wobei jedes der Begrenzungselemente (20; 30) eine erste Oberfläche (23; 33) umfasst, die in Bezug auf eine Lauffläche geneigt ist, die radial außen auf dem Laufflächenband definiert ist, wobei sich die erste Oberfläche (23; 33) von der Oberseite (24; 34) des Begrenzungselements zu einem Boden (10c; 11c) der ersten Nut (10; 11) erstreckt,
wobei:
- ein Laufflächenmuster, das durch die Gesamtanordnung von Nuten und Kerben definiert ist, die in dem Laufflächenband angebracht sind, und
- ein Modul (M) des Laufflächenmusters, das durch den minimalen Laufflächenbandabschnitt definiert ist, dessen Konfiguration entlang der Umfangserstreckung des Laufflächenbands aufeinanderfolgend wiederholt wird, um das Laufflächenmuster zu bilden, oder ein Umfangsabschnitt davon
auf dem Laufflächenband **gekennzeichnet sind,**
**dadurch** gekennzeichnet, dass
die Begrenzungselemente so positioniert sind, dass ein Begrenzungselement für jeweils zwei oder drei aufeinanderfolgende Module bereitgestellt wird,
oder
wobei das Modul durch ein erstes Teilmodul (M1) und durch ein zweites Teilmodul (M2) gebildet ist, die unterschiedliche Anordnungen aufweisen, und jedes der Begrenzungselemente (20) in einem der ersten Teilmodule (M1) positioniert ist.

2. Reifen nach Anspruch 1, wobei die gegenüberliegenden Seiten (21; 31) des ersten Paars Bögen eines Umfangs sind.

3. Reifen nach Anspruch 1 oder 2, wobei die erste Nut (10; 11) eine Umfangsnut des Laufflächenbands ist.

4. Reifen nach einem der vorstehenden Ansprüche, wobei die erste Oberfläche (23; 33) in Bezug auf die Lauffläche (3) um einen Winkel zwischen 15° und 50° geneigt ist.

5. Reifen nach einem der vorstehenden Ansprüche, wobei die erste Oberfläche (23; 33) parallel zu der Längsrichtung der ersten Nut ist.

6. Reifen nach einem der vorstehenden Ansprüche, wobei sich die erste Oberfläche (23; 33) von der Oberseite (24; 34) nach oben zu einer Seitenwand (25; 35) des Begrenzungselements erstreckt, die sich von dem Boden (10c; 11c) der ersten Nut erstreckt, wobei die erste Oberfläche (23; 33) und die Seitenwand (25; 35) des Begrenzungselements bei einer Tiefe in Bezug auf die Lauffläche zwischen 2 und 4 mm miteinander verbunden sind.

7. Reifen nach einem der vorstehenden Ansprüche, wobei sich das Begrenzungselement (20; 30) von einer ersten Seitenwand (10a; 11a) der ersten Nut (10) zu einer zweiten Seitenwand (10b; 11b) der ersten Nut, die der ersten Seitenwand gegenüberliegt, über zwischen 30 % und 80 % der Breite der ersten Nut erstreckt.

8. Reifen nach Anspruch 7, wobei mindestens ein Teil des Begrenzungselements (120) von der ersten Seitenwand (110a) durch eine Kerbe (121) getrennt ist.

9. Reifen nach einem der Ansprüche 7 oder 8, wobei die erste Oberfläche (23; 33) und die erste Seitenwand (10a; 11a) der ersten Nut bei einer Tiefe zwischen 1 und 2 mm in Bezug auf die Lauffläche (3) miteinander verbunden sind.

10. Reifen nach einem der Ansprüche 7 oder 8, wobei die erste Oberfläche (23; 33) eine Seitenwand des Begrenzungselements (20; 30) mit der Lauffläche (3) so verbindet, dass die Oberseite (24; 34) des Begrenzungselements durch eine Ecke zwischen der Lauffläche und der ersten Oberfläche gebildet wird.

11. Reifen nach einem der vorstehenden Ansprüche, wobei das Begrenzungselement (20; 30) zwischen 30 % und 60 % des Querschnitts der ersten Nut blockiert.

12. Reifen nach einem der vorstehenden Ansprüche, wobei die Begrenzungselemente (20; 30) in der Längsrichtung so beabstandet sind, dass in der Aufstandsfläche die erste Nut (10) zwischen 1 und 3 Begrenzungselemente umfasst.

13. Reifen nach einem der vorstehenden Ansprüche, wobei eine zweite Nut (11) in dem Laufflächenband bereitgestellt ist, in der eine zweite Vielzahl von Begrenzungselementen (30) bereitgestellt ist, und wobei ein Begrenzungselement (30) der zweiten Vielzahl, die vorzugsweise in der ersten Richtung (A) ausgerichtet ist, jedem Begrenzungselement (20) der ersten Vielzahl entspricht.

14. Reifen nach Anspruch 13, wobei für jedes Begrenzungselement (20) der ersten Vielzahl die erste Richtung (A) in Bezug auf die Längsrichtung der ersten Nut (10) um einen Winkel zwischen 40° und 50° geneigt ist und für jedes Begrenzungselement (30) der zweiten Vielzahl die erste Richtung (B) in Bezug auf die Längsrichtung der zweiten Nut (11) um einen Winkel zwischen 60° und 70° geneigt ist.

15. Reifen nach Anspruch 13 oder 14, wobei die erste und die zweite Nut (10, 11) nebeneinander liegen und sich die Begrenzungselemente der ersten Vielzahl und der zweiten Vielzahl von Seitenwänden der ersten Nut bzw. der zweiten Nut erstrecken, die denselben Block (12) begrenzen.

## Revendications

1. Pneumatique (1) pour roues de véhicule, comprenant une bande de roulement (2), sur laquelle sont définies :
- au moins une première rainure (10 ; 11) s'étendant dans une direction longitudinale ; et
- une première pluralité d'éléments de limitation (20 ; 30) prévus à l'intérieur de ladite première rainure pour restreindre la section transversale de ladite première rainure,
dans lequel chacun desdits éléments de limitation présente, en vue en plan, une forme sensiblement quadrilatérale dans laquelle est identifiée une première paire de côtés opposés (21 ; 31) qui s'étendent dans une première direction (A ; B) qui est inclinée par rapport à ladite direction longitudinale d'un angle compris entre 30° et 80°,
dans lequel chacun desdits éléments de limitation (20 ; 30) comprend une première surface (23 ; 33), qui est inclinée par rapport à une surface de roulement définie radialement à l'extérieur sur ladite bande de roulement, ladite première surface (23 ; 33) s'étendant du sommet (24 ; 34) dudit élément de limitation jusqu'au fond (10c ; 11c) de ladite première rainure (10 ; 11),
dans lequel :
- un motif de bande de roulement défini par la disposition globale des rainures et des encoches réalisées dans ladite bande de roulement, et
- un module (M) dudit motif de bande de roulement, défini par la partie minimale de bande de roulement dont la configuration est répétée successivement le long de l'extension circonférentielle de la bande de roulement pour former ledit motif de bande de roulement, ou une partie circonférentielle de celui-ci,
sont identifiés sur ladite bande de roulement,
**caractérisé en ce que**
lesdits éléments de limitation sont positionnés de telle sorte qu'un élément de limitation soit prévu pour tous les deux ou trois modules successifs,
ou
dans lequel ledit module est formé par un premier sous-module (M1) et par un second sous-module (M2) présentant des agencements différents, et chacun desdits éléments de limitation (20) est positionné dans l'un desdits premiers sous-modules (M1).

2. Pneumatique selon la revendication 1, dans lequel lesdits côtés opposés (21 ; 31) de ladite première paire sont des arcs d'une circonférence.

3. Pneumatique selon la revendication 1 ou 2, dans lequel ladite première rainure (10 ; 11) est une rainure circonférentielle de ladite bande de roulement.

4. Pneumatique selon l'une quelconque des revendications précédentes, dans lequel ladite première surface (23 ; 33) est inclinée par rapport à ladite surface de roulement (3) d'un angle compris entre 15° et 50°.

5. Pneumatique selon l'une quelconque des revendications précédentes, dans lequel ladite première surface (23 ; 33) est parallèle à ladite direction longitudinale de ladite première rainure.

6. Pneumatique selon l'une quelconque des revendications précédentes, dans lequel ladite première surface (23 ; 33) s'étend depuis ledit sommet (24 ; 34) jusqu'à une paroi latérale (25 ; 35) dudit élément de limitation qui s'étend depuis ledit fond (10c ; 11c) de ladite première rainure, dans lequel ladite première surface (23 ; 33) et ladite paroi latérale (25 ; 35) dudit élément de limitation sont reliées ensemble à une profondeur par rapport à ladite surface de roulement comprise entre 2 et 4 mm.

7. Pneumatique selon l'une quelconque des revendications précédentes, dans lequel ledit élément de limitation (20 ; 30) s'étend depuis une première paroi latérale (10a ; 11a) de ladite première rainure (10) vers une seconde paroi latérale (10b ; 11b) de ladite première rainure qui est opposée à ladite première paroi latérale, sur entre 30 % et 80 % de la largeur de ladite première rainure.

8. Pneumatique selon la revendication 7, dans lequel au moins une partie dudit élément de limitation (120) est séparée de ladite première paroi latérale (110a) par une encoche (121).

9. Pneumatique selon l'une quelconque des revendications 7 ou 8, dans lequel ladite première surface (23 ; 33) et ladite première paroi latérale (10a ; 11a) de ladite première rainure sont reliées l'une à l'autre à une profondeur comprise entre 1 et 2 mm par rapport à ladite surface de roulement (3).

10. Pneumatique selon l'une quelconque des revendications 7 ou 8, dans lequel ladite première surface (23 ; 33) relie une paroi latérale dudit élément de limitation (20 ; 30) à ladite surface de roulement (3), de telle sorte que ledit sommet (24 ; 34) dudit élément de limitation soit formé par un angle entre ladite surface de roulement et ladite première surface.

11. Pneumatique selon l'une quelconque des revendications précédentes, dans lequel ledit élément de limitation (20 ; 30) obstrue entre 30 % et 60 % de la section transversale de ladite première rainure.

12. Pneumatique selon l'une quelconque des revendications précédentes, dans lequel lesdits éléments de limitation (20 ; 30) sont espacés dans ladite direction longitudinale de telle sorte que, dans la zone d'empreinte, ladite première rainure (10) comprend entre 1 et 3 éléments de limitation.

13. Pneumatique selon l'une quelconque des revendications précédentes, dans lequel une seconde rainure (11) est prévue dans ladite bande de roulement, dans laquelle une seconde pluralité d'éléments de limitation (30) est prévue, et dans lequel un élément de limitation (30) de ladite seconde pluralité, qui est de préférence aligné dans ladite première direction (A), correspond à chaque élément de limitation (20) de ladite première pluralité.

14. Pneumatique selon la revendication 13, dans lequel, pour chaque élément de limitation (20) de ladite première pluralité, ladite première direction (A) est inclinée par rapport à ladite direction longitudinale de ladite première rainure (10) d'un angle compris entre 40° et 50°, et pour chaque élément de limitation (30) de ladite seconde pluralité, ladite première direction (B) est inclinée par rapport à ladite direction longitudinale de ladite seconde rainure (11) d'un angle compris entre 60° et 70°.

15. Pneumatique selon la revendication 13 ou 14, dans lequel lesdites première et seconde rainures (10, 11) sont adjacentes l'une à l'autre et lesdits éléments de limitation de ladite première pluralité et de ladite seconde pluralité s'étendent à partir de parois latérales de ladite première rainure et de ladite seconde rainure, respectivement, qui délimitent le même bloc (12).
